# FASCICULE DE BREVET EUROPEEN

(11) **EP 1 928 711 B1**
(45) Date de publication et mention de la délivrance du brevet: **15.12.2010**
(21) Numéro de dépôt: 06726254.3
(22) Date de dépôt: 17.03.2006
(51) Int. Cl.: B60S 1/38

(54) **RACLETTE D'ESSUIE-VITRE PERFECTIONNEE ET BALAI D'ESSUIE-VITRE POURVU D'UNE TELLE RACLETTE**
VERBESSERTER WINDSCHUTZSCHEIBENWISCHSTREIFEN UND SCHEIBENWISCHERBLATT MIT DEM WISCHSTREIFEN
IMPROVED WINDSHIELD WIPING STRIP AND A WIPER BLADE PROVIDED WITH SAID WIPING STRIP

(30) Priorité: 08.04.2005 FR 0503538
(43) Date de publication de la demande: 11.06.2008
(73) Titulaire: Peugeot Citroën Automobiles Société Anonyme, 78140 Velizy Villacoublay (FR)
(72) Inventeur: JEUFFE, Gérard, F-78810 Feucherolles (FR)
(86) Numéro de dépôt international: PCT/FR2006/050234
(87) Numéro de publication internationale: WO 2006/106249

(56) Documents cités:
- US-A- 2 063 375
- US-A- 3 636 583
- US-A- 4 524 481

## Description

La présente invention concerne une raclette d'essuyage pour balai d'essuie-vitre de véhicule automobile.

Dans l'état de la technique, nous connaissons notamment le document US 3636583 qui décrit une raclette d'essuyage possédant une partie creuse prolongée par une lèvre. En fonctionnement normal, les flancs de la partie creuse se déforment sous l'action du déplacement de la lèvre de la raclette sur le pare brise, et viennent successivement en appui sur une butée franche disposée dans l'axe médian à l'intérieur de la partie creuse. En outre, les flancs de la partie creuse peuvent être munis de protubérances orientées vers l'intérieur de la partie creuse afin de venir en appui fermement contre la butée fixe et rigide en fonctionnement normal.

L'invention concerne une raclette d'essuyage pour balai d'essuie-vitre de véhicule automobile, adaptée pour conserver ses propriétés mécaniques en cas de pression élevée de la raclette sur le pare brise.

A cet effet, la raclette d'essuyage pour balai d'essuie-vitre de véhicule automobile comporte :
- un talon de fixation au bras d'un balai d'essuie-vitre,
- une lèvre d'essuyage,
- une partie flexible d'articulation reliant la lèvre au talon, la lèvre s'étendant selon un plan axial médian de la raclette, et la partie d'articulation comprenant deux parois flexibles incurvées sensiblement symétriques l'une de l'autre par rapport à ce plan, et définissant un évidement entre elles et le talon, et
- une butée faisant saillie du talon dans l'évidement, symétrique par rapport audit plan, et prévue pour recevoir en appui les parois et ainsi limiter, les déformations en flexion de la partie d'articulation la butée comprenant deux parties d'appui en saillie latérale de l'âme, prévues pour recevoir en appui les parois flexibles, les parties d'appui étant formées à partir du bord libre de l'âme, ladite butée ayant une âme flexible s'étendant sensiblement dans ledit plan de symétrie (P).

Dans les raclettes d'essuyage connues de ce type, la partie d'articulation peut être soumise à des déformations importantes, en fonctionnement, en particulier lorsque le pare-brise comporte des défauts ou irrégularités de surface.

Dans de telles raclettes d'essuyage connues, la butée est essentiellement rigide, de sorte qu'elle ne subit sensiblement aucune déformation lors de la venue en appui des parois flexibles de la partie d'articulation.

Ainsi, pour des déformations importantes de la partie d'articulation, il se produit des chocs et des frottements entre cette dernière et la butée, qui génèrent du bruit ainsi que des défauts d'essuyage. Ce bruit peut atteindre un niveau relativement élevé et être gênant, bien que la pression d'essuyage appliquée à la raclette pour améliorer son efficacité soit généralement importante.

L'invention a pour but de remédier à cet inconvénient, et, à cet effet, a pour objet une raclette d'essuyage du type précité, dans laquelle ladite butée a un profil en T et en ce que l'épaisseur minimale de l'âme, adaptée pour fléchir en cas de force anormalement élevée, est comprise entre 1, 8 et 2,2 fois l'épaisseur minimale de la paroi flexible et l'épaisseur des deux parties d'appui, prévue pour pourvoir fléchir avec les parois flexibles, est égale au moins à l'épaisseur de l'âme.

Suivant d'autres caractéristiques, optionnelles, de l'invention :
- chacune desdites parois flexibles a une épaisseur qui varie entre le talon et la lèvre ; et
- la raclette est formée d'une pièce moulée ou extrudée.

L'invention a en outre pour objet un balai d'essuie-vitre de véhicule automobile pourvu d'une raclette d'essuyage telle que décrite précédemment.

Un mode particulier de réalisation de l'invention va maintenant être décrit plus en détail, en référence aux dessins annexés, sur lesquels :
- la Figure 1 représente, en section transversale, une raclette d'essuyage conforme à l'invention, en appui sur la surface d'un pare-brise de véhicule automobile, la raclette d'essuyage étant au repos ;
- la Figure 2 est une vue analogue illustrant la raclette d'essuyage de la Figure 1 en cours de fonctionnement normal ; et
- la Figure 3 est une vue analogue à la Figure 2, illustrant un niveau de déformation très élevé de la raclette d'essuyage, lorsque la pression d'essuyage devient anormalement élevée.

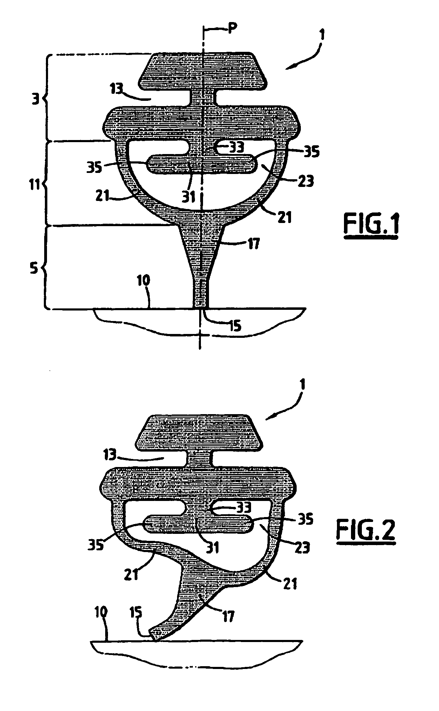

Sur la Figure 1, on a représenté une raclette d'essuyage pour balai d'essuie-vitre de véhicule automobile, d'un type conforme à un mode particulier de réalisation de l'invention, la raclette d'essuyage 1 étant au repos, dans un état non déformé.

La raclette 1 est allongée selon une direction principale, et a été représentée par une section transversale courante. La raclette 1 est symétrique par rapport à un plan axial médian P.

La raclette 1 est réalisée, dans l'exemple représenté, en une seule pièce moulée en un matériau élastomère, tel que, par exemple, du caoutchouc.

La raclette 1 comporte un talon 3 de fixation au bras d'un balai d'essuie-vitre qui n'a pas été représenté, et une lèvre d'essuyage 5, prévue pour prendre appui sur la surface extérieure 10 d'un pare-brise de véhicule.

La raclette 1 comprend d'autre part une partie flexible d'articulation 11, reliant la lèvre 5 au talon 3, de sorte que la lèvre 5 puisse prendre des inclinaisons différentes par rapport à la surface du pare-brise 10 lors du fonctionnement de l'essuie-vitre.

Le talon 3 est généralement formé d'un bloc de profil général trapézoïdal, symétrique par rapport au plan P, dans lequel sont formées symétriquement deux rainures 13 longitudinales. La direction longitudinale s'entend de la direction principale de la raclette d'essuyage, qui correspond à la direction d'une ligne d'appui de la lèvre 5 sur la surface du pare-brise 10.

Les rainures 13 sont prévues pour recevoir à engagement des rails correspondants d'un bras de balai, pour assurer la fixation de la raclette à ce dernier.

La lèvre 5, dans l'exemple représenté, a un profil effilé vers son bord libre 15, ce profil ayant une base de plus grande épaisseur 17 du côté de la partie d'articulation 11.

La lèvre 5 s'étend sensiblement dans le plan de symétrie P de la raclette.

La partie d'articulation 11 est essentiellement formée de deux parois flexibles 21, symétriques l'une de l'autre par rapport au plan P. Ces parois 21 s'étendent depuis le talon 3 vers la base 17 de plus grande épaisseur de la lèvre 5, selon un profil incurvé dont la concavité est tournée vers le talon 3 et le plan de symétrie P.

Au repos, le profil de chacune des parois incurvées 21 a une forme générale en arc de cercle, qui donne à l'ensemble des deux parois 21 une forme générale d'arceau semi-circulaire.

Les parois 21 définissent, entre elles et le talon 3, un évidement 23.

Les parois 21 ont chacune une épaisseur qui varie, à partir du talon 3 vers la lèvre 5, d'abord de façon décroissante, puis de façon croissante. Cette disposition permet d'améliorer le comportement de la partie d'articulation 11 du point de vue de la répartition des contraintes de flexion, lorsque la raclette d'essuyage est en phase de fonctionnement normal.

Cependant, dans une variante de réalisation (non représentée), cette épaisseur pourrait être prévue constante.

D'autre part, la raclette 1 comporte une butée 31 formée en saillie du talon 3 dans l'évidement 23.

Cette butée 31 est prévue pour limiter les déformations de la partie d'articulation 11 en flexion, lors du fonctionnement de la raclette d'essuyage.

La butée 31 permet de limiter les résonances acoustiques transmises au pare-brise, et de diminuer le bruit de fonctionnement à l'intérieur du véhicule.

Au repos, la butée 31 ne fait pas contact avec les parois 21. Elle est en outre adaptée pour recevoir en appui les parois 21, uniquement lors de déformations de ces dernières dépassant le niveau de déformation normal. Cela sera vu et explicité par la suite.

La butée 31 a, dans l'exemple représenté, un profil en T.

La butée 31 possède en effet une âme 33 s'étendant sensiblement dans le plan P, à partir du talon 3, et deux parties d'appui symétriques 35 faisant saillie transversalement de l'âme 33. Ces parties d'appui 35 sont prévues pour recevoir en appui les parois flexibles 21.

L'âme 33 est flexible dans la mesure où son épaisseur minimale est adaptée pour fléchir en cas de force anormalement élevée. De préférence, l'épaisseur minimale de l'âme 33 est comprise entre 1,8 et 2,2 fois l'épaisseur minimale de la paroi 21.

De la même façon, l'épaisseur des parties latérales 35 est prévue pour pouvoir fléchir avec les parois 21 lorsque celles-ci viennent en appui sur la butée. L'épaisseur courante des deux parties d'appui 35 est égale au moins à l'épaisseur minimale de l'âme 33.

Sur la Figure 2, on a représenté le profil de la raclette d'essuyage de la Figure 1, lorsque cette dernière est en fonctionnement. Dans la situation illustrée sur la Figure 2, la raclette se déplace gauche à droite (selon l'orientation de la Figure) sur la surface du pare-brise 10.

Dans une telle phase de fonctionnement normal, les parois 21 de la partie d'articulation 11 se déforment en flexion sans venir en contact avec la butée 31.

La partie d'articulation 11 assure une orientation optimale de la lèvre 5 par rapport au pare-brise, et permet de conserver une pression de contact de la lèvre sur le pare-brise sensiblement uniforme sur toute la course de la raclette.

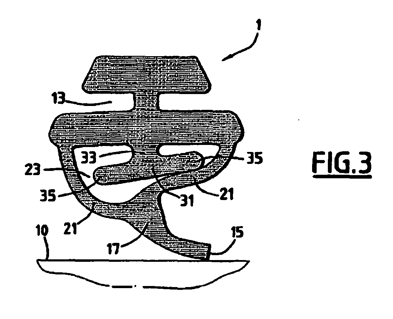

Comme on le voit sur la Figure 3, lorsque la raclette d'essuyage 1 subit des pressions anormalement élevées en fonctionnement sur le pare-brise, les parois 21 se déforment de façon plus importante, et l'une d'elles vient en appui sur la butée 31, au niveau de la partie d'appui 35 correspondante.

La flexibilité de la butée 31, qui se traduit par une flexion de l'âme 33 et de la partie d'appui 35, permet d'accompagner la flexion de la paroi 21, en la limitant et en amortissant le choc de la paroi sur la butée.

Cet amortissement réduit de façon très sensible le bruit produit par la raclette d'essuyage lors de phases de fonctionnement sévères, dues à des pressions de contact excessives.

De plus, on limite ainsi les contraintes sur la paroi 21, ce qui contribue à augmenter sensiblement l'endurance de la raclette d'essuyage.

L'invention apporte ainsi une solution au problème des nuisances acoustiques générées par les raclettes d'essuyage, alors que ce problème est actuellement amplifié par l'utilisation de formes de pare-brises de plus en plus complexes, tout en augmentant la longévité des raclettes.

## Revendications

1. Raclette d'essuyage pour balai d'essuie-vitre de véhicule automobile, comportant
- un talon (3) de fixation au bras d'un balai d'essuie-vitre,
- une lèvre d'essuyage (5),
- une partie flexible d'articulation (11) reliant la lèvre (5) au talon (3), la lèvre s'étendant selon un plan axial médian (P) de la raclette, et la partie d'articulation (11) comprenant deux parois flexibles incurvées (21) sensiblement symétriques l'une de l'autre par rapport à ce plan (P), et définissant un évidement (23) entre elles et le talon (3), et
- une butée (31) faisant saillie du talon (3) dans l'évidement (23), sensiblement symétrique par rapport audit plan (P), et prévue pour recevoir en appui les parois (21) et ainsi limiter les déformations en flexion de la partie d'articulation (21),
ladite butée (31) comprenant deux parties (35) d'appui en saillie latérale de l'âme (33), prévues pour recevoir en appui les parois flexibles (21), les parties d'appui (35) étant formées à partir du bord libre de l'âme (33), ladite butée (31) ayant une âme (33) flexible s'étendant sensiblement, dans ledit plan de symétrie (P) **caractérisée en ce que** ladite butée (31) a un profil en T et **en ce que** l'épaisseur minimale de l'âme(33), adaptée pour fléchir en cas de force anormalement élevée, est comprise entre 1,8 et 2,2 fois l'épaisseur minimale de la paroi flexible (21) et l'épaisseur des deux parties d'appui (35), prévue pour pourvoir fléchir avec les parois flexibles (21), est égale au moins à l'épaisseur de l'âme (33).

2. Raclette d'essuyage suivant la revendication 1 **caractérisée en ce que** chacune desdites parois flexibles (21) a une épaisseur qui varie entre le talon (3) et la lèvre (5).

3. Raclette d'essuyage suivant l'une quelconque des revendications 1 ou 2 **caractérisée en ce qu'**elle est formée d'une pièce moulée ou extrudée.

4. Balai d'essuyage de véhicule automobile, **caractérisé en ce qu'**il est pourvu d'une raclette d'essuyage selon l'une quelconque des revendications 1 à 3.

## Claims

1. Wiping scraper for a windscreen wiper blade of an automotive vehicle, including
- a heel (3) for fastening to an arm of a windscreen wiper blade,
- a wiping lip (5),
- a linking flexible portion (11) connecting the lip (5) to the heel (3), the lip extending along an axial median plan (P) of the scraper, and the linking portion (11) including two curved flexible walls (21) substantially symmetrical to one another with respect to this plan (P), and defining a recess (23) between them and the heel (3), and
- an abutment (31) protruding from the heel (3) into the recess (23), substantially symmetrical with respect to said plan (P), and provided to receive in a supporting manner the walls (21) and thereby restrain the bending distortions of the linking portion (21),
said abutment (31) including two supporting portions (35) laterally protruding from the core (33), provided to receive in a supporting manner flexible walls (21), the supporting portions (35) being formed from the free edge of the core (33), said abutment (31) having a flexible core (33) extending substantially along said symmetrical plan (P), **characterised in that** said abutment (31) has a T profile and **in that** the minimum thickness of the core (33), adapted to bend in case of an abnormally high force, is between 1.8 and 2.2 times the minimum thickness of the flexible wall (21) and the thickness of the two supporting portions (35), provided to be able to bend together with the flexible walls (21), is at least equal to the thickness of the core (33).

2. Wiping scraper according to claim 1, **characterised in that** each said flexible wall (21) has a thickness that ranges between the heel (3) and the lip (5).

3. Wiping scraper according to any of claims 1 or 2, **characterised in that** it is formed as a moulded or extruded part.

4. Windscreen wiper blade for an automotive vehicle, **characterised in that** it is provided with a wiping scraper according to any of claims 1 to 3.

## Patentansprüche

1. Wischerblatt für den Scheibenwischer eines Automobils, mit
- einem Steg (3) zur Befestigung am Wischerarm,
- einer Wischerlippe (5),
- einem flexiblen Artikulationsabschnitt (11), zwischen der Lippe (5) und dem Steg (5), wobei sich die Lippe entlang einer Mittelebene (P) des Wischerblattes erstreckt, und der Artikulationsabschnitt (11) zwei flexible gekrümmte Wände (21) umfasst, die beiderseits dieser Ebene (P) in etwa symmetrisch angeordnet sind und einen Hohlraum (23) zwischen ihnen und dem Steg (3) definieren, und
- einem Anschlag (31), der aus dem Steg (3) heraus in den Hohlraum (23) hervorspringt, in etwa symmetrisch bezüglich der besagten Ebene (P) und dazu vorgesehen, die Wände (21) abzustützen und so die Biegungsverformungen des Artikulationsabschnitts (21) zu begrenzen,
wobei der besagte Anschlag (31) zwei Stützteile (35) umfasst, die seitlich aus dem Kern (33) herausragen, und dazu vorgesehen sind, die flexiblen Wände (21) abzustützen, wobei die Stützteile (35) aus dem freien Rand des Kerns (33) gebildet sind, und der Anschlag (31) einen flexiblen Kern (33) aufweist, der sich in etwa über die besagte Symmetrieebene (P) erstreckt, **dadurch gekennzeichnet, dass** der Anschlag (31) ein T-Profil aufweist und **dadurch**, dass die Mindeststärke des Kerns (33), die so ausgelegt ist, um im Fall einer anormal erhöhten Kraft nachzugeben, dem 1,8 bis 2,2 Fachen der Mindeststärke der flexiblen Wand (21) entspricht, und die Stärke der beiden Stützteile (35), die so ausgelegt ist, um sich mit den flexiblen Wänden (21) verbiegen zu können, zumindest der Stärke des Kerns (33) entspricht.

2. Wischerblatt nach Anspruch 1, **dadurch gekennzeichnet, dass** jede der flexiblen Wände (21) eine Stärke aufweist, die zwischen dem Steg (3) und der Lippe (5) variiert.

3. Wischerblatt nach irgendeinem der Ansprüche 1 oder 2, **dadurch gekennzeichnet, dass** es aus einem sptizgegossenen oder extrudierten Stück gebildet wird.

4. Scheibenwischer eines Automobils, **dadurch gekennzeichnet, dass** er mit einem Wischerblatt nach irgendeinem der Ansprüche 1 bis 3 ausgestattet ist.
